# EUROPEAN PATENT APPLICATION

(11) **EP 2 769 859 A1**
(43) Date of publication of application: **27.08.2014**
(21) Application number: 14156036.7
(22) Date of filing: 20.02.2014
(51) Int. Cl.: B60G 7/00, B62D 7/18

(54) **Wheel support device**

(30) Priority: 22.02.2013 US 201313774264
(71) Applicant: AxleTech International IP Holdings, LLC, Troy, MI 48083 (US)
(72) Inventor: Deveny, Jay, Birmingham, MI Michigan 48009 (US); Ursu, Dan S., Windsor, Ontario N8P 1R2 (CA)
(74) Representative: Stuttard, Garry Philip

(57) **Abstract**

A wheel assembly for a vehicle includes a knuckle having an upper end and a lower end. A bracket is mounted to one of the upper end and the lower end of the knuckle. A ball joint is mounted to the bracket and configured for attaching the wheel assembly to the vehicle. One or more pins and/or bolts contained within a respective knuckle bore of the knuckle and a respective bracket bore of the bracket transfers a load between the knuckle and the bracket in both vertical and horizontal directions along a longitudinal axis of the vehicle.

## Description

The subject invention generally relates to a wheel assembly for a vehicle.

Wheel assemblies generally include a knuckle. A wheel hub is rotatably supported by the knuckle. The knuckle is coupled to the vehicle by an upper ball joint and a lower ball joint. The upper ball joint and the lower ball joint are concentric with and aligned along a king pin axis. The upper ball joint and the lower ball joint may be mounted to an upper bracket and a lower bracket respectively, with the upper bracket and the lower bracket mounted to the knuckle by a plurality of fasteners, such as by bolts. Accordingly, the fasteners provide a clamping force to mount the brackets to the knuckle. Additionally, the fasteners transfer a load, i.e., a force, between the knuckle and the upper bracket and the lower bracket. This load is considerable when the wheel assembly is utilized in heavy duty vehicles, such as in commercial off-road use and in military applications.

The knuckle, the upper bracket and the lower bracket are typically manufactured from steel in order to adequately transfer the load between the knuckle and the upper and lower brackets to the fasteners connecting the upper and lower brackets to the knuckle. Having the knuckle, the upper bracket and the lower bracket manufactured from steel increases the weight of the wheel assembly, which increases the overall weight of the vehicle and thereby negatively affects fuel efficiency of the vehicle.

The subject invention provides a wheel assembly for a vehicle. The wheel assembly comprises a knuckle. The knuckle includes an upper end and a lower end spaced from the upper end. The knuckle defines a knuckle bore at one of the upper and lower ends extending along a bore axis. A bracket is mounted to one of the upper end and the lower end of the knuckle. The bracket defines an aperture for receiving a ball stud within the aperture. The bracket defines a bracket bore extending along the bore axis substantially aligned with the knuckle bore. A pin is placed in slip fit engagement within the knuckle bore and the bracket bore. The pin transfers a load between the knuckle and the bracket both vertically and horizontally with respect to a longitudinal axis of the vehicle.

In another related embodiment, the knuckle bore includes a series of internal threads and the bracket bore extends entirely through the bracket. A bolt having a shank is in slip fit engagement with said bracket bore and has an externally threaded end in threading engagement with the knuckle bore.

Accordingly, the wheel assembly of the subject invention utilizes a pin or bolt to transfer a load, i.e., a force between the knuckle and the bracket. The use of the pin or bolt to transfer the load between the knuckle and the bracket permits the knuckle to be manufactured from a lightweight material, such as aluminum, thereby reducing the weight of the wheel assembly. Furthermore, the pin or bolt reduces the load transferred between the knuckle and a plurality of fasteners disposed within the bracket, which improves a clamping force applied by the fasteners to the knuckle and the bracket.

Other advantages of the present invention will be readily appreciated, as the same becomes better understood by reference to the following detailed description when considered in connection with the accompanying drawings.
Figure 1 is a perspective view of a wheel assembly in accordance with one exemplary embodiment.
Figure 2 is a partial cross-sectional view of the wheel assembly of Figure 1.
Figure 3 is a rear plan view of the wheel assembly of Figure 1.
Figure 4 is a perspective view of a bracket of the wheel assembly of Figure 1.
Figure 5 is a cross-sectional view of the bracket along line 5-5 of Figure 4.
Figure 6 is a top plan view of the bracket of Figure 1.
Figure 7 is a front plan view of the bracket of Figure 1.
Figure 8 is a perspective view of a wheel assembly in accordance with another exemplary embodiment.
Figure 9 is an exploded cross-sectional view of a pin, a bracket and a portion of a knuckle of the wheel assembly of Figure 8.
Figure 10 is a perspective view of the bracket of the wheel assembly of Figure 8 with the pin in exploded relationship thereto.
Figure 11 is a top plan view of the bracket of Figure 8 with the pin disposed within the bracket.
Figure 12 is a front plan view of the bracket of Figure 8.
Figure 13 is a perspective view of a wheel assembly in accordance with yet another exemplary embodiment.
Figure 14 is an exploded cross-sectional view of a pin, a bracket and a portion of a knuckle of the wheel assembly of Figure 13.
Figure 15 is a perspective view of the bracket of Figure 13 with a pair of pins in exploded relationship thereto.
Figure 16 is a top plan view of the bracket of Figure 13 with the pins disposed within the bracket.
Figure 17 is a front plan view of the bracket of Figure 13.
Figure 18 is a perspective view of a wheel assembly in accordance with another exemplary embodiment.
Figure 19 is an exploded cross-sectional view of a bolt, a bracket and a portion of a knuckle of the wheel assembly of Figure 18.
Figure 20 is a perspective view of the bracket of Figure 18 with a pair of bolts disposed therein.
Figure 21 is a top plan view of the bracket of Figure 18 with the bolts disposed within the bracket.
Figure 22 is a front plan view of the bracket of Figure 18.

Referring to the Figures, wherein like numerals indicate like or corresponding parts throughout the several views, a wheel assembly is shown generally at 20. The wheel assembly 20 is for a vehicle and rotatably supports a wheel hub 22. A wheel (not shown) is mounted to the wheel hub 22, and a tire (not shown) is mounted to the wheel as is well known. It should be appreciated that the wheel hub 22 may include any suitable hub assembly, and specifically may include an electric drive hub assembly, a gear reduction hub assembly, or some other hub assembly particularly suited for heavy duty vehicles and/or off-highway applications. It should also be appreciated that the scope of the claims are not limited by the type and configuration of the wheel hub 22.

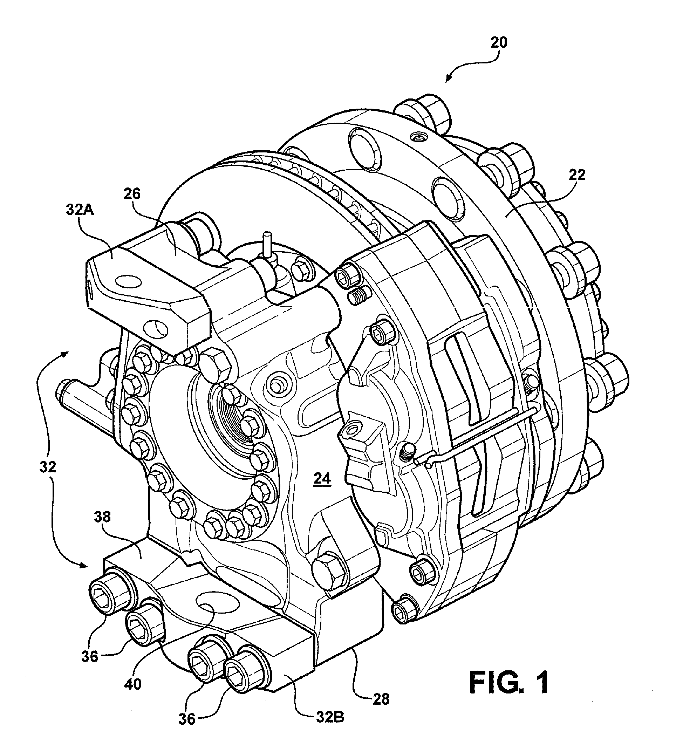

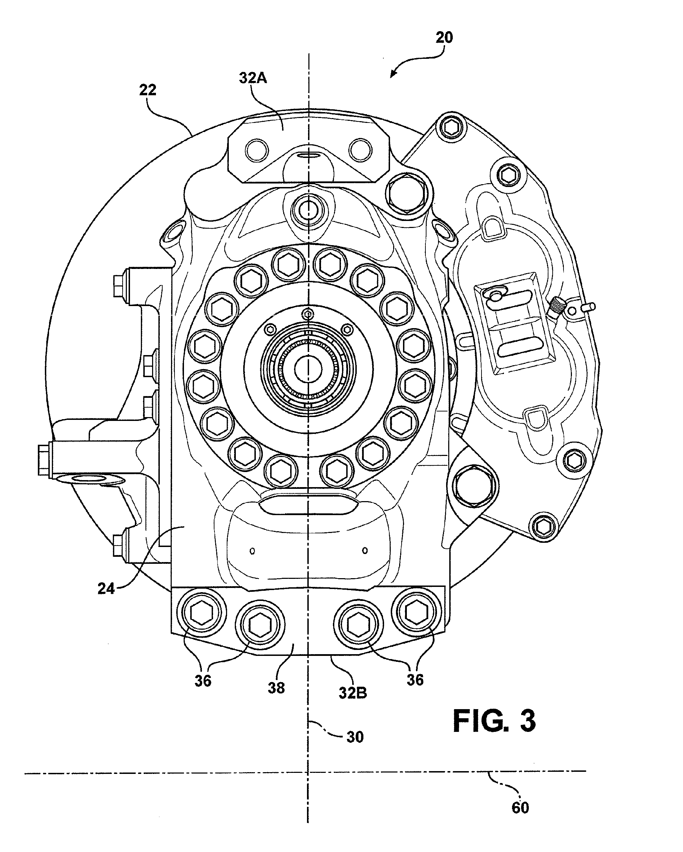

Referring to Figures 1 through 3, the wheel assembly 20 includes a knuckle 24. The wheel hub 22 is rotatably mounted to the knuckle 24. The knuckle 24 includes an upper end 26 and a lower end 28. The lower end 28 of the knuckle 24 is vertically spaced from the upper end 26 of the knuckle 24 along an axis 30, such as a king pin axis.

A bracket 32 is mounted to one of the upper end 26 and the lower end 28 of the knuckle 24. Preferably, the bracket 32 includes an upper bracket 32A mounted to the upper end 26 of the knuckle 24 and a lower bracket 32B mounted to the lower end 28 of the knuckle 24. It should be appreciated that throughout the detailed description of the subject invention, reference to "the bracket 32" describes both the upper bracket 32A and the lower bracket 32B unless otherwise noted. Further, within the scope of the claims, the recited term "the bracket 32" refers to either the upper bracket 32A or the lower bracket 32B and should not be limited to require both the upper bracket 32A and the lower bracket 32B unless specifically recited.

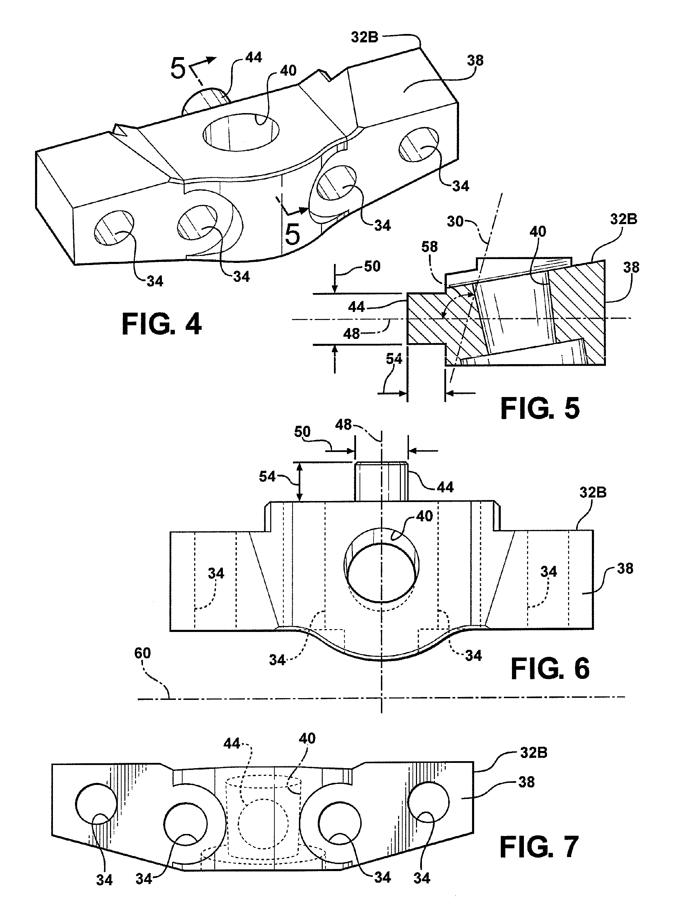

Referring also to Figures 4 through 7, the bracket 32 defines a plurality of fastener apertures 34. The fastener apertures 34 extend transverse to the axis 30 and are generally perpendicular to the knuckle 24. The wheel assembly 20 further includes a plurality of fasteners 36. Each of the plurality of fasteners 36 is slideably disposed within one of the plurality of fastener apertures 34. Each of the fasteners 36 is in threaded engagement with one of the knuckle 24 and the bracket 32. As shown, the fasteners 36 are in threaded engagement with the knuckle 24. The fasteners 36 provide a clamping force to bias the knuckle 24 and the bracket 32 together.

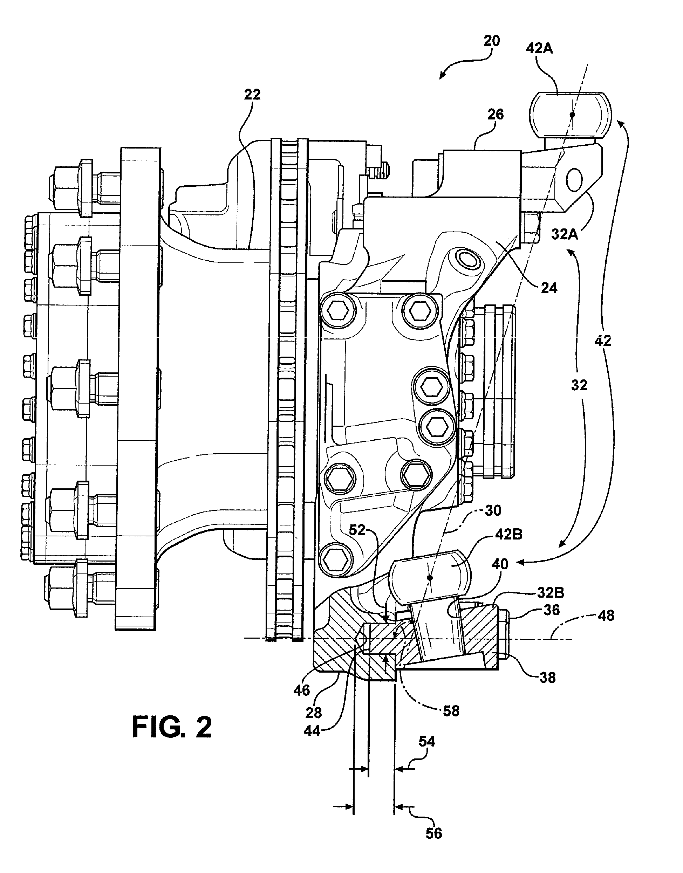

The bracket 32 includes a body 38. The body 38 of the bracket 32 defines an aperture 40. As best shown in Figure 2, the aperture 40 receives a ball stud 42 of a ball joint therein. The ball joint couples the wheel assembly 20 to the vehicle as is well known in the art. Preferably, and as shown, the wheel assembly 20 includes an upper ball stud 42A mounted to the upper bracket 32A and a lower ball stud 42B mounted to the lower bracket 32B.

One of the knuckle 24 and the bracket 32 defines a boss 44. Another of the knuckle 24 and the bracket 32 defines a bore 46. Preferably, and as best shown in FIG. 2, the bracket 32 includes the boss 44 and the knuckle 24 defines the bore 46. As shown, the boss 44 extends from the body 38 of the bracket 32 along a central axis 48. Preferably, the body 38 and the boss 44 are integrally formed. However, it should be appreciated that the boss 44 may be a separate piece from both the knuckle 24 and the bracket 32 and fixedly mounted to one of the knuckle 24 and the bracket 32.

The boss 44 is disposed within the bore 46 in slip fit engagement within the bore 46. Accordingly, the bore 46 includes a cross-section defining a shape. The boss 44 also includes a cross-section defining a shape complimentary to the cross-sectional shape of the bore 46. The cross-sectional shape of the boss 44 mates with the cross-sectional shape of the bore 46 in a tight lash free engagement so as to permit load transfer therebetween in all directions radially about the central axis 48.

Preferably, and as shown, the cross-sectional shape of the bore 46 and the cross-sectional shape of the boss 44 include a circular cross-sectional shape. The boss 44 includes a boss diameter 50 and the bore 46 includes a bore diameter 52. The bore diameter 52 is between the range of 40 microns and 120 microns larger than the boss diameter 50. Preferably, the diameter of the boss 44 is at least 20 mm. Even more preferably, the diameter of the boss 44 is at least 25 mm. While the boss 44 and the bore 46 are both shown as having a circular cross-sectional shape, it should be appreciated that the cross-sectional shape of the boss 44 and the cross-sectional shape of the bore 46 may include shapes other than circular, such as a square cross-sectional shape, a hexagonal cross-sectional shape, etc.

The boss 44 extends from the knuckle 24 or the body 38 of the bracket 32 a boss length 54. The bore 46 extends into the knuckle 24 or the body 38 of the bracket 32 a bore distance 56. The bore distance 56 is greater than the boss length 54. Accordingly, an end of the boss 44 does not contact an end of the bore 46 so that any debris caught within the bore 46 does not interfere with the boss 44. As shown, the knuckle 24 defines the bore 46 and the bore distance 56 and the bracket 32 includes the boss 44, which defines the boss length 54. Preferably, the boss length 54 is at least 15 mm. Even more preferably, the boss length 54 is at least 19 mm.

As described above, the boss 44 extends from the body 38 along the central axis 48. The central axis 48 intersects the king pin axis 30 with the boss 44 concentric with the central axis 48. Preferably, the central axis 48 intersects the king pin axis 30 at a non-perpendicular angle 58 relative to the body 38 as shown in FIG. 5. The angled intersection between the central axis 48 and the king pin axis 30 allows the central axis 48, and therewith the boss 44, to extend in a generally horizontal direction with the king pin axis 30 angled away from vertical to provide a proper ride alignment for the vehicle as is well known in the art.

Preferably, the knuckle 24 is manufactured from aluminum to reduce the weight of the wheel assembly 20, with the bracket 32 being manufactured from steel to provide sufficient strength. However, it should be appreciated that the knuckle 24 may be manufactured from a material other than aluminum, such as steel; and the bracket 32 may be manufactured from a material other than steel, such as cast iron.

The boss 44 transfers a load between the knuckle 24 and the bracket 32 vertically along the king pin axis 30 and horizontally along a longitudinal axis 60 of the vehicle. The longitudinal axis 60 is generally transverse to the king pin axis 30 and extends between a front of the vehicle and a rear of the vehicle.

The vehicle includes multiple wheel assemblies 20, which transfer the weight of the vehicle, i.e., the load, to a surface, and likewise transfer a reactionary load from the surface to the vehicle. The tight lash-free fit between the boss 44 and the bore 46 transfer the load between the knuckle 24 and the bracket 32. Because the boss 44 and the bore 46 include the complimentary cross-sectional shapes, the boss 44 is capable of transferring the load between the knuckle 24 and the bracket 32 in any direction extending radially outward from the central axis 48.

It should be appreciated that the magnitude of the load that may be transferred is dependent upon the shear strength of the boss 44. The shear strength of the boss 44 is dependent upon, among other factors, a material strength of the boss 44 and the cross-sectional area of the boss 44 perpendicular to the central axis 48. By increasing the cross-sectional area of the boss 44, the shear strength of the boss 44 increases. The boss 44 therefore increases the shear strength between the knuckle 24 and the bracket 32 beyond that provided by the fasteners 36 connecting the bracket 32 to the knuckle 24. Accordingly, if so desired, the boss 44 may be designed to transfer the entire load and the fasteners 36 may be sized to merely provide the necessary clamping force. Additionally, the boss 44 may be sized to permit use of different materials having different material strengths.

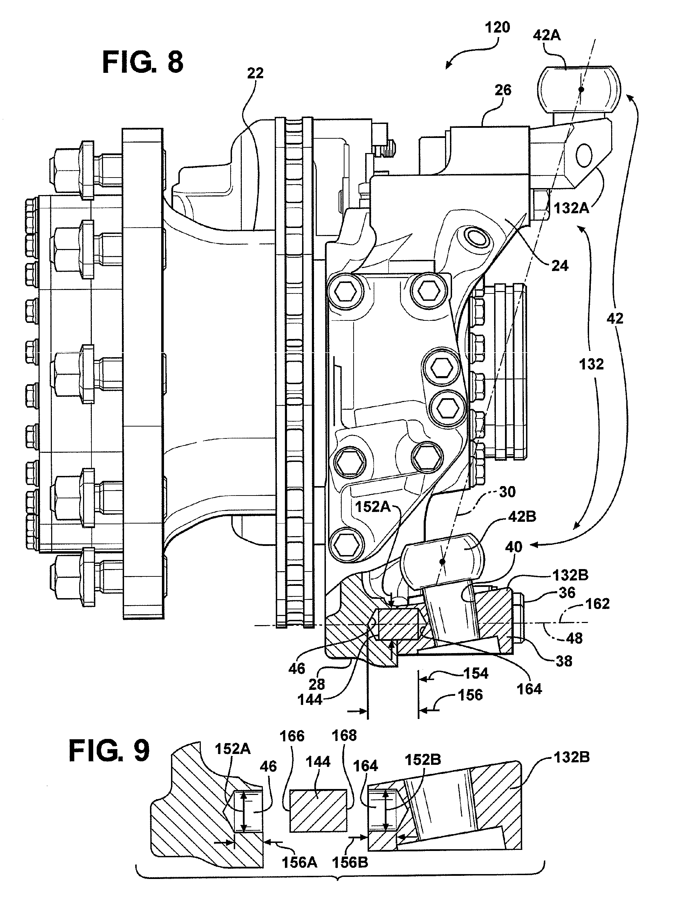

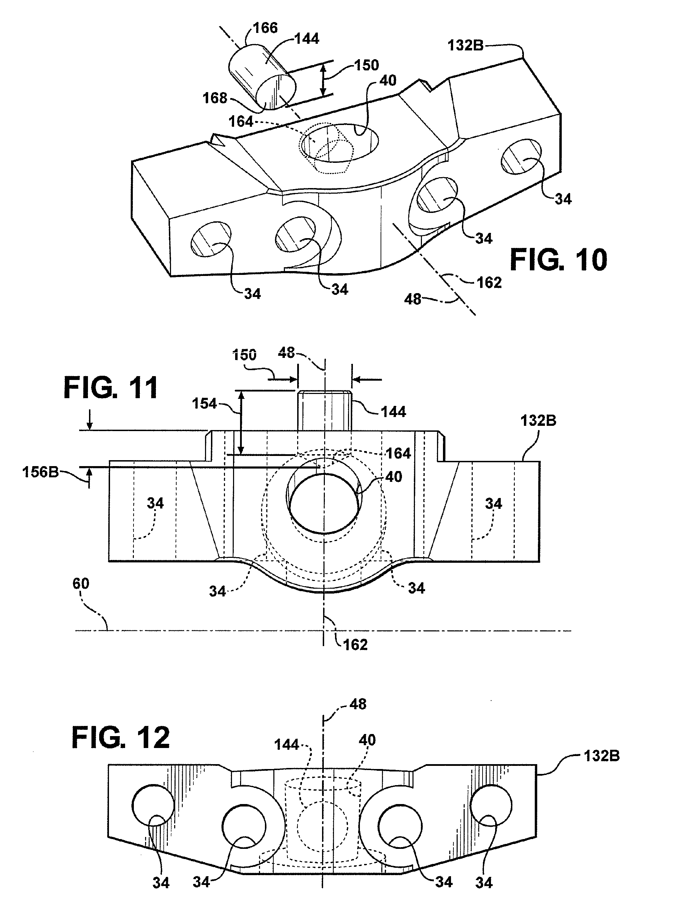

Referring now to Figures 8-12, an alternative exemplary embodiment of a wheel hub assembly 120 is illustrated. In this embodiment, reference numerals of certain parts are increased by 100 to indicate corresponding, yet different, components. A knuckle 24 and a bracket 132 of this embodiment are no longer supported by a boss 44 as in Figures 1-7, but instead are supported by a pin 144, which is similarly in a slip fit engagement within the knuckle 24 and bracket 132.

Overall the knuckle 24 of this embodiment has a similar configuration as the knuckle 124 shown in Figures 1-7, including an upper end 26, a lower end 28 and a knuckle bore 46 at one of the upper 26 and lower 28 ends extending along a bore axis 162. The bracket 132 also has a similar configuration to the bracket 132 shown in Figures 1-7, including the aperture 40. In this exemplary embodiment, however, the bracket 132 also defines a bracket bore 164 extending along the bore axis 162 substantially aligned with said knuckle bore 46. In this instance, the term substantially is meant to mean aligned in such a manner as to permit proper installation and mounting of the bracket 132 to the knuckle 24.

The pin 144 is in slip fit engagement within the knuckle bore 46 and within the bracket bore 164 along the bore axis 162 to transfer a load between the knuckle 24 and the bracket 132 in a similar fashion as described above relative to Figures 1-7. The pin 144 may be of any suitable configuration and material so long as adequate loading can be transferred.

The pin 144 includes first 166 and second 168 ends each having a cross-sectional configuration. The knuckle bore 46 has a cross-sectional configuration corresponding to / complimentary with the first end 166 of the pin 144. Similarly, the bracket bore 164 has a cross-sectional configuration corresponding to / complimentary with the second end 168 of the pin 144. Preferably, the cross-sectional configurations of the first 166 and second 168 ends of the pin 144 and the knuckle 46 and bracket 164 bores are substantially identical. Even more preferably, as shown, these cross-sectional configurations are circular. In other words, the cross-sectional shape of the pin 144 mates with the cross-sectional shape of the bores 46, 164 in a tight lash free engagement (or slip fit, or press fit engagement) so as to permit load transfer therebetween in all directions radially about the bore axis.

The pin 144 includes a pin diameter 150 and the bores 46, 164 include a bore diameter 152A, 152B. Preferably, the bore diameter 152A, 152B is between the range of 40 microns and 120 microns larger than the pin diameter 150. Preferably, the pin diameter 150 is at least 20 mm. Even more preferably, the pin diameter 150 is at least 25 mm. While the pin 144 and the bores 46, 164 are shown as having a circular cross-sectional shape, it should be appreciated that the cross-sectional shape of the pin 144 and the cross-sectional shape of the bores 46, 164 may include shapes other than circular, such as a square cross-sectional shape, a hexagonal cross-sectional shape, etc.

The pin 144 defines a pin length 154. Each of the knuckle 46 and bracket 164 bores includes a bore distance 156A, 156B. The combination of the knuckle 46 and bracket 164 bores defines a bore distance 156 greater than the pin length 154. Accordingly, the first 166 and second 168 ends of the pin 144 do not necessarily contact the ends of the bores 46, 164. As such, any debris caught within the bores 46, 164 does not interfere with the insertion of the pin 144.

Preferably, the pin length 154 is apportioned equally within the knuckle 24 and the bracket 132. Stated differently, the pin 144 is positioned within the bores 46, 164 such that half of the pin length 154 is positioned within the knuckle bore 46 and the opposing half of the pin length 154 is positioned within the bracket bore 164

As discussed relative to the embodiment of Figures 1-7, the upper 26 and lower 28 ends of the knuckle 24 define an axis 30, such as a king pin axis. The bore axis 162 intersects the king pin axis 30. The pin 144 is preferably concentric with the bore axis 162 and also aligned with a central axis 48 of the bracket 132. Preferably, the bore axis 162 and central axis 48 both intersect the king pin axis 30 at a non-perpendicular angle relative to the bracket 132 (similar to the non-perpendicular angle 58 as shown in Figure 5).

The pin 144 transfers a load between the knuckle 24 and the bracket 132 vertically along the king pin axis 30 and horizontally along a longitudinal axis 60 of the vehicle. The longitudinal axis 60 is generally transverse to the king pin axis 30 and extends between a front of the vehicle and a rear of the vehicle.

The vehicle includes multiple wheel hub assemblies 120, which transfer the weight of the vehicle, i.e., the load, to a surface, and likewise transfer a reactionary load from the surface to the vehicle. The tight lash-free slip or press fit between the pin 144 and the bores 46, 164 transfer the load between the knuckle 24 and the bracket 132. Because the pin 144 and the bores 46, 164 include the complimentary cross-sectional shapes, the pin 144 is capable of transferring the load between the knuckle 24 and the bracket 132 in any direction extending radially outward from the bore axis 162.

It should be appreciated that the magnitude of the load that may be transferred is dependent upon the shear strength of the pin 144. The shear strength of the pin 144 is dependent upon, among other factors, a material strength of the pin 144 and the cross-sectional area of the pin 144 perpendicular to the bore axis 162. By increasing the cross-sectional area of the pin 144, the shear strength of the pin 144 increases. The pin 144 therefore increases the shear strength between the knuckle 24 and the bracket 132 beyond that provided by fasteners 36 connecting the bracket 132 to the knuckle 24. Accordingly, if so desired, the pin 144 may be designed to transfer the entire load and the fasteners 36 may be sized to merely provide the necessary clamping force. Additionally, the pin 144 may be sized to permit use of different materials having different material strengths.

As with the embodiment shown in Figures 1-7, the knuckle 24 of the embodiment of Figures 8-12 can be manufactured from aluminum and a wheel hub 22, of any suitable configuration, can be rotatably mounted to the knuckle 24 as known in the art.

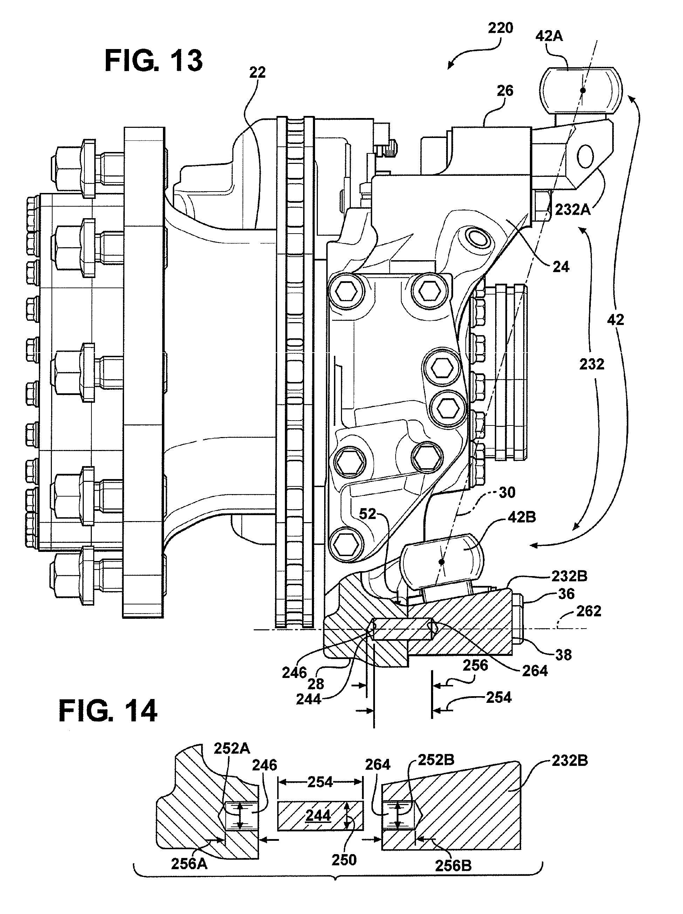

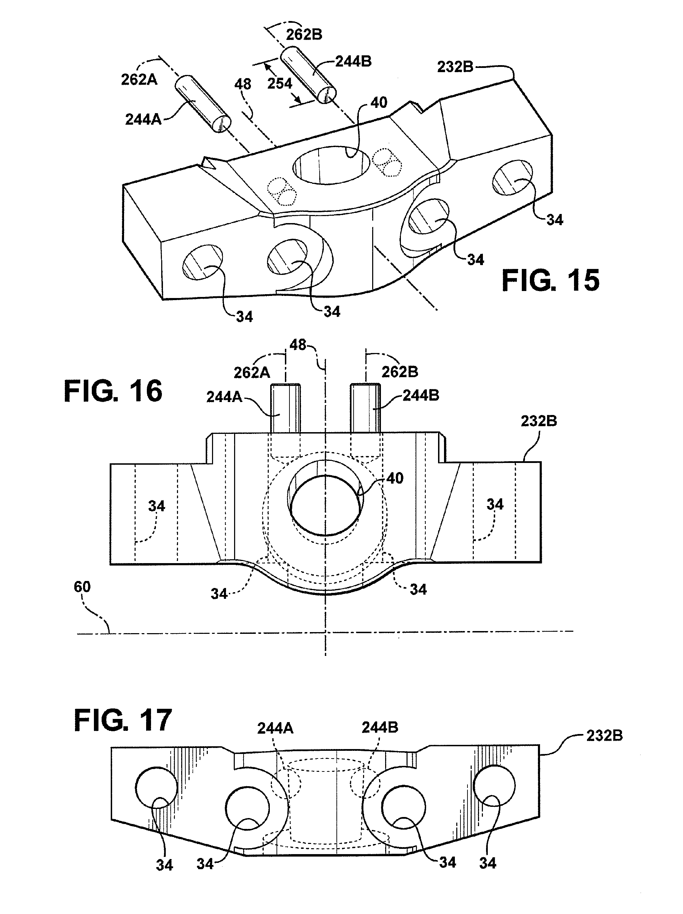

In still another embodiment, as shown in Figures 13-17, as opposed to the use of a single pin 144, or in conjunction with the use of the pin 144, multiple pins 244 may be utilized. This embodiment also has the reference numerals of certain parts increased by 100 or 200 to indicate corresponding, yet different, components.

In particular, the knuckle 24 of the embodiment of Figures 13-17 includes a first knuckle bore 246A extending along a first bore axis 262A and a second knuckle bore 246B, disposed on a common end of the knuckle 24 as the first knuckle bore 246A, extending along a second bore axis 262B. Similarly, the bracket 232 of this embodiment includes a first bracket bore 264A extending along the first bore axis 262A substantially aligned with the first knuckle bore 246A. The bracket also includes a second bracket bore 264B, disposed on a common end of the knuckle 24 as the first bracket bore 264A, extending along the second bore axis 262B substantially aligned with the second knuckle bore 264B.

Further, the embodiment of Figures 13-17 includes a first pin 244A in slip fit engagement within the first knuckle bore 246A and within the first bracket bore 264A along the first bore axis 262A. Similarly, this embodiment includes a second pin 244B in slip fit engagement within the second knuckle bore 246B and within the second bracket bore 264B along the second bore axis 262B to transfer a load between the knuckle 24 and the bracket 232 both vertically and horizontally with respect to a longitudinal axis 60 of the vehicle.

In the preferred embodiment and as shown, the first 244A and second 244B pins are substantially parallel. Specifically, the first 246A and second 246B knuckle bores are substantially parallel to each other, and the first 264A and second 264B bracket bores are substantially parallel to each other, which in turn aligns the first 244A and second 244B pins.

The size and shape of the pins 244 and bores 246, 264 may be sized equally to the pin 144 and bores 46, 164 of the embodiment of Figures 8-12, or alternatively may be sized or shaped differently to the pin 144 and bores 46, 164 of the embodiment of Figures 8-12.

In the exemplary embodiment of Figures 13-17, the multiple respective bores 246, 264 of the knuckle and bracket extend parallel to and on opposing sides of a central axis 48. The bores 246, 264 include a cross-section defining a shape. Each of the pins 244 also include a cross-section defining a shape complimentary to the cross-sectional shape of the bores 246, 264. The cross-sectional shape of each of the pins 244 mates with the cross-sectional shape of the bores 246, 264 in a tight lash free engagement (slip fit or press-fit engagement) so as to permit load transfer therebetween in all directions radially about the central axis 48.

Preferably, and as shown, the cross-sectional shape of the bores 246, 264 and the cross-sectional shape of the pins 244 are substantially circular. While the pins 244 and the bores 246, 264 are shown as having a circular cross-sectional shape, it should be appreciated that the cross-sectional shape of the pins 244 and the cross-sectional shape of the bores 246, 264 may include shapes other than circular, such as a square cross-sectional shape, a hexagonal cross-sectional shape, etc. In addition, the respective cross-sectional shape of the first pin 244A and the cross-sectional shape of the respective bores 246A, 264A containing the first pin 244A may be different than another respective cross-sectional shape of the second pin 244B and the cross-sectional shape of the respective bores 246B, 264B and still fall within the spirit of the present invention.

Each of the first 244A and second 244B pins have a pin length 254. Each knuckle bore 246 extends into the knuckle 24 at a respective bore distance 256A and each bracket bore 264 extends into the bracket 232 at a respective bore distance 256B. The combined distance of the bore distances 256A and 256B is greater than the pin length 254. Accordingly, an end of each of the pins 244 does not necessarily contact the respective ends of the bores 246, 264 within which it is contained so that any debris caught within the bores 246, 264 does not interfere with the pin 244.

Preferably, when installed, each of the first 244A and second 244B pins are apportioned equally within the knuckle 24 and the bracket 232. Stated differently, each of the pins 244 are positioned within the bores 246, 264 such that half of the pin length 254 is positioned within the respective bore 246 of the knuckle 24 and the other half of the pin length 254 is positioned within the respective bore 264 of the bracket 232. In certain embodiments, the pin length 254 of the first 244A and second 244B pins is equal. In other embodiments, the pin lengths 254 of respective pins on opposite sides of the central axis 48 of the same assembly may vary.

The vehicle includes multiple wheel hub assemblies 220, which transfer the weight of the vehicle, i.e., the load, to a surface, and likewise transfer a reactionary load from the surface to the vehicle. The tight lash-free slip / press fit between the pins 244 and the respective bores 246, 264 transfer the load between the knuckle 24 and the bracket 232. Because the pins 244 and the respective bores 246, 264 include the complimentary cross-sectional shapes, the pins 244 are capable of transferring the load between the knuckle 24 and the bracket 232 in any direction extending radially outward from the central axis 48.

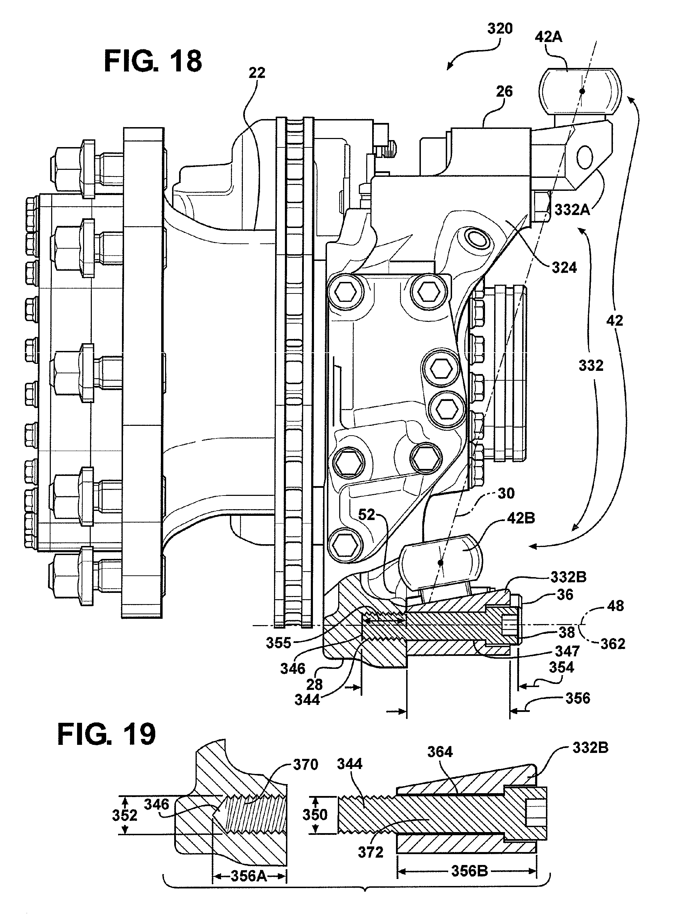

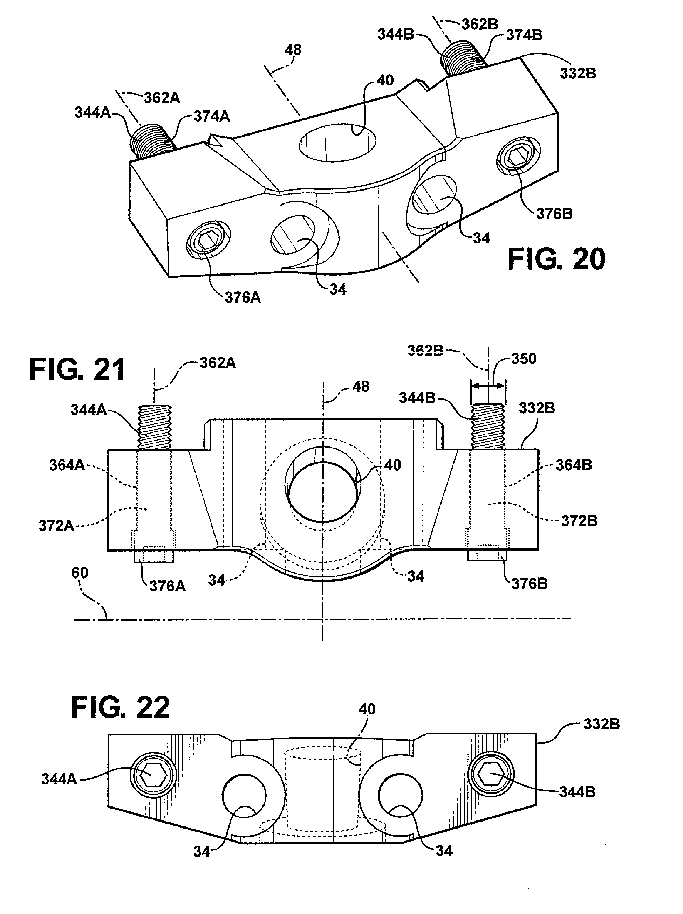

In still another exemplary embodiment, as shown in Figures 18-22, the knuckle 324 and bracket 332 likewise have a similar configuration. As with the above embodiments reference numerals of certain parts are increased by 100, 200 or 300 to indicate corresponding, yet different parts. The knuckle bore 346 of this embodiment includes a series of internal threads 370. Also, the bracket of this embodiment includes opposing faces with a bracket bore 364 extending entirely through the bracket 332 between the faces.

In some similar respects to the pins 244 of Figures 13-17, the embodiment of Figures 18-22 includes a bolt 344 having a shank 372 in slip fit engagement within the bracket bore 364 and having an externally threaded end 374 in threading engagement with the knuckle bore 346 to transfers a load between the knuckle 324 and the bracket 332 both vertically and horizontally with respect to a longitudinal axis 60 of the vehicle.

The shank 372 has a cross-sectional configuration and the bracket bore 364 has a cross-sectional configuration corresponding to the configuration of the shank 372. Preferably, and as shown, the cross-sectional configuration of the bracket bore 364 and shank 372 are circular. The bolt 344 extends through the bracket 332 and has a bolt length 354. The knuckle bore 346 extends into the knuckle 324 at a respective bore distance 356. The bore distance 356 is greater than a portion of the bolt 344 extending into the bore 346. Accordingly, an end of the bolt 344 does not contact the end of the bore 346 so that any debris caught within the bore 346 does not interfere with the bolt 344.

Preferably, and as shown, the knuckle 324 includes a first knuckle bore 346 extending along a first bore axis 362A and having a first series of internal threads 370 and a second knuckle bore 346, disposed on a common end of the knuckle 324 as the first knuckle bore 346, extending along a second bore axis 362B and having a second series of internal threads 370. Similarly, the bracket 332 includes a first bracket bore 364A extending along the first bore axis 362A substantially aligned with the first knuckle bore 346 and a second bracket bore 364B, disposed on a common end of the knuckle 324 as the first bracket bore 364, extending along the second bore axis 362B substantially aligned with the second knuckle bore 346.

Further, the embodiment of Figures 18-22, includes a first bolt 344A having a first shank 372A in slip fit engagement within the first bracket bore 364A and having a first externally threaded end 374A in threading engagement with the first knuckle bore 346. Also, this embodiment includes a second bolt 344B having a second shank 372B in slip fit engagement within the second bracket bore 364B and having a second externally threaded end 374B in threading engagement with the second knuckle bore 346. The first bolt 344A also includes a first bolt head 376A mounted to the first shank 372A at an opposite end from the first externally threaded end 374A. Similarly, the second bolt 344B includes a second bolt head 376B mounted to the second shank 372B at an opposite end from the second externally threaded end 374B. The bolt heads 376A, 376B can engage a counter-sunk ledge within the bracket 332 as shown.

In the most preferred embodiment, and as shown, the first 344A and second 344B bolts are substantially parallel. In particular, the first 376A and second 372B shanks are substantially parallel to each other, and the first 364A and second 364B bracket bores are substantially parallel to each other.

As described above, the upper 26 and lower 28 ends of the knuckle 324 define a king pin axis 30 and the bore axis 362 intersects the king pin axis 30. Preferably, the bore axis 362 intersects the king pin axis 30 at a non-perpendicular angle relative to the bracket 332. The bolts 344 extend parallel to but are spaced apart from a central axis 48. The central axis 48 also intersects the king pin axis 30. Preferably, the central axis 48 also intersects the king pin axis 30 at a non-perpendicular angle relative to the bracket 332 (similar to the non-perpendicular angle 58 as shown in Figure 5). The angled intersection between the central axis 48 and the king pin axis 30 allows the central axis 48 to extend in a generally horizontal direction with the king pin axis 30 angled away from vertical to provide a proper ride alignment for the vehicle as is well known in the art.

The vehicle includes multiple wheel hub assemblies 320, which transfer the weight of the vehicle, i.e., the load, to a surface, and likewise transfer a reactionary load from the surface to the vehicle. The tight lash-free slit / press fit between the respective bolts 344 and bores 346, 364 transfer the load between the knuckle 324 and the bracket 332. Because the bolts 344 and the bores 346, 364 include the complimentary cross-sectional shapes, the bolts 344 collectively are capable of transferring the load between the knuckle 224 and the bracket 332 in any direction extending radially outward from the central axis 48, which permits a wheel hub 22 that is rotatably mounted to the knuckle 324 to be manufactured from aluminum.

It should be appreciated that the magnitude of the load that may be transferred is dependent upon the collective shear strength of the bolts 344. The shear strength of the respective bolts 344 is dependent upon, among other factors, a material strength of the bolt 344 and the cross-sectional area of the bolt 344 perpendicular to the central axis 48. By increasing the cross-sectional area of the bolt 344, the shear strength of the bolt 344 increases. The bolt 344 therefore increases the shear strength between the knuckle 324 and the bracket 332 beyond that provided by the fasteners 36 connecting the bracket 332 to the knuckle 324. Accordingly, if so desired, the bolts 344 may be designed to transfer the entire load and the fasteners 36 may be sized to merely provide the necessary clamping force. Additionally, the bolts 344 may be sized to permit use of different materials having different material strengths.

Preferably, the knuckle 24, 324 in accordance with any of the embodiments described above is manufactured from aluminum to reduce the weight of the wheel assembly 20, 120, 220, 320 with the bracket 32, 132, 232, 332 being manufactured from steel to provide sufficient strength. However, it should be appreciated that the knuckle 24,324 may be manufactured from a material other than aluminum, such as steel; and the bracket 32, 123, 232, 332 may be manufactured from a material other than steel, such as cast iron.

In certain other embodiments (not shown), a combination of a centrally located pin, multiple additional pins and bolts may be combined into additional embodiments and fall within the spirit of the present invention. In addition, it is contemplated that the size and shapes of pins and bolts may be uniform, or varies, and still fall within the spirit of the present invention.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. The use of the word "said" in the apparatus claims refers to an antecedent that is a positive recitation meant to be included in the coverage of the claims whereas the word "the" precedes a word not meant to be included in the coverage of the claims. It is, therefore, to be understood that within the scope of the appended claims, the invention may be practiced otherwise than as specifically described.

## Claims

1. A wheel assembly for a vehicle, said assembly comprising:
a knuckle having an upper end and a lower end spaced from said upper end with said knuckle defining a knuckle bore at one of said upper and lower ends extends along a bore axis;
a bracket mounted to one of said upper end and said lower end of said knuckle and defining an aperture for receiving a ball stud within said aperture, with said bracket defining a bracket bore extending along said bore axis substantially aligned with said knuckle bore; and
a pin in slip fit engagement within said knuckle bore and within said bracket bore along said bore axis to transfer a load between said knuckle and said bracket both vertically and horizontally with respect to a longitudinal axis of the vehicle.

2. An assembly as claimed in claim 1 wherein said pin includes first and second ends each having a cross-sectional configuration with said knuckle bore having a cross-sectional configuration corresponding to said first end of said pin and said bracket bore having a cross-sectional configuration corresponding to said second end of said pin.

3. An assembly as claimed in claim 2 wherein said cross-sectional configurations of said first and second ends of said pin and said knuckle and bracket bores are substantially identical.

4. An assembly as claimed in claim 2 or 3 wherein said cross-sectional configurations of said first and second ends of said pin and said knuckle and bracket bores are circular.

5. An assembly as claimed in any preceding claim wherein said first end of said pin includes a diameter and said knuckle bore includes a diameter between the range of 40 microns and 120 microns larger than said diameter of said first end, and wherein said second end of said pin includes a diameter and said bracket bore includes a diameter between the range of 40 microns and 120 microns larger than said diameter of said second end.

6. An assembly as claimed in any of claims 1 to 4 wherein said pin defines a pin length and the combination of said knuckle and bracket bores defines a bore distance with said bore distance being greater than said pin length.

7. An assembly as claimed in claim 6 wherein half of said pin length is disposed within said knuckle bore and wherein an opposing half of said pin length is disposed within said bracket bore.

8. An assembly as claimed in any of claims 1 to 4 wherein said upper and lower ends of said knuckle define a king pin axis and wherein said bore axis intersects said king pin axis, and wherein said bore axis intersects said king pin axis at a non-perpendicular angle relative to said body.

9. An assembly as claimed in claim 1 wherein
said knuckle bore is further defined as a first knuckle bore extending along a first bore axis,
said bracket bore is further defined as a first bracket bore extending along said first bore axis substantially aligned with said first knuckle bore,
said pin is further defined as a first pin in slip fit engagement within said first knuckle bore and within said first bracket bore along said first bore axis, and
further including a second knuckle bore disposed on a common end of said knuckle as said first knuckle bore and extending along a second bore axis, and
further including a second bracket bore disposed on a common end of said knuckle as said first bracket bore and extending along said second bore axis substantially aligned with said second knuckle bore, and
further including a second pin in slip fit engagement within said second knuckle bore and within said second bracket bore along said second bore axis to further transfer a load between said knuckle and said bracket both vertically and horizontally with respect to a longitudinal axis of the vehicle.

10. An assembly as claimed in claim 9 wherein said first and second pins are substantially parallel.

11. An assembly as claimed in claim 9 or 10 wherein said first and second knuckle bores are substantially parallel to each other, and said first and second bracket bores are substantially parallel to each other.

12. A wheel assembly for a vehicle, said assembly comprising:
a knuckle having an upper end and a lower end spaced from said upper end with said knuckle defining a knuckle bore at one of said upper and lower ends extending along a bore axis, with said knuckle bore including a series of internal threads;
a bracket mounted to one of said upper end and said lower end of said knuckle and defining an aperture for receiving a ball stud within said aperture, with said bracket defining a bracket bore extending along said bore axis substantially aligned with said knuckle bore, and said bracket including opposing faces with said bracket bore extending entirely through said bracket between said faces; and
a bolt having a shank in slip fit engagement within said bracket bore and having a externally threaded end in threading engagement with said knuckle bore to transfer a load between said knuckle and said bracket both vertically and horizontally with respect to a longitudinal axis of the vehicle.

13. An assembly as claimed in claim 12 wherein said shank has a cross-sectional configuration with said bracket bore having a cross-sectional configuration corresponding to said configuration of said shank.

14. An assembly as claimed in claim 13 wherein said cross-sectional configurations of said shank and said bracket bore are circular.

15. An assembly as claimed in any preceding claim wherein said knuckle is manufactured from aluminum.

16. An assembly as claimed in claim 12 wherein
said knuckle bore is further defined as a first knuckle bore extending along a first bore axis and having a first series of threads,
said bracket bore is further defined as a first bracket bore extending along said first bore axis substantially aligned with said first knuckle bore,
said bolt is further defined as a first bolt having a first shank in slip fit engagement within said first bracket bore and having a first externally threaded end in threading engagement with said first knuckle bore, and
further including a second knuckle bore disposed on a common end of said knuckle as said first knuckle bore and extending along a second bore axis and having a second series of threads, and
further including a second bracket bore disposed on a common end of said knuckle as said first bracket bore and extending along said second bore axis substantially aligned with said second knuckle bore, and
further including a second bolt having a second shank in slip fit engagement within said second bracket bore and having a second externally threaded end in threading engagement with said second knuckle bore to further transfer a load between said knuckle and said bracket both vertically and horizontally with respect to a longitudinal axis of the vehicle.

17. An assembly as claimed in claim 16 wherein said first and second bolts are substantially parallel.

18. An assembly as claimed in claim 16 or 17 wherein said first and second shanks are substantially parallel to each other, and said first and second bracket bores are substantially parallel to each other.
